(19) Europäisches Patentamt
European Patent Office
Office européen des brevets

(11) **EP 2 722 136 A1**

(12) **EUROPEAN PATENT APPLICATION**

(43) Date of publication:
**23.04.2014 Bulletin 2014/17**

(51) Int Cl.:
***B25J 9/16*** (2006.01)

(21) Application number: **12189174.1**

(22) Date of filing: **19.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **inos Automationssoftware GmbH 70563 Stuttgart (DE)**

(72) Inventors:
• **Alifragkis, Matthaios, Dr.**
  **12243 Egaleo (GR)**

• **Bouganis, Alexandros, Dr.**
  **15669 Papagou (GR)**
• **Demopoulos, Andreas**
  **LU7 4WL Leigthon Buzzard (GB)**
• **Tassakos, Charalambos, Dr.-Ing**
  **70597 Sonenberg (DE)**

(74) Representative: **DREISS Patentanwälte PartG mbB**
**Patentanwälte**
**Gerokstrasse 1**
**70188 Stuttgart (DE)**

(54) **Method for in-line calibration of an industrial robot, calibration system for performing such a method and industrial robot comprising such a calibration system**

(57)    The invention refers to a method for in-line calibration of an industrial robot (1). The robot (1) comprises a fixed base section (2) and a multi chain link robot arm (3). The chain links (4) are interconnected and connected to the base section (2) of the robot (1), respectively, by means of articulated joints (5). An end effector (6) of the robot arm (3) can be moved in respect to the base section (2) within a three-dimensional workspace into any desired location. The idea is to move the end effector (6) into a predefined calibration location and to determine characteristic parameters of the robot (1) for that location. The characteristic parameters are compared to previously acquired values of the corresponding parameters for that calibration location. The differences between the characteristic parameters of the current location and the previously acquired parameters are used for correcting the kinematic model of the robot (1) and during normal operation of the robot (1) to enhance the accuracy of movement of the distal end (6). The end effector (6) is moved exactly into the calibration location by means of an iterative closed loop control process, in which light sources (7) fixedly connected to the end effector (6) emit light rays which impact on at least one optical position sensor (12) fixedly positioned in respect to the robot base (2). The end effector (6) is moved such that the actual ray positions (20) on the sensors (12) are moved to a predefined position (20') corresponding to the predefined calibration location by means of the iterative process.

Fig. 3

**EP 2 722 136 A1**

**Description**

The present invention refers to a method for in-line calibration of an industrial robot, to a calibration system for in-line calibration of an industrial robot and to an industrial robot. The robot comprises a fixed base section and a multi chain link robot arm. The chain links are interconnected and connected to the base section of the robot, respectively, by means of articulated joints. A distal end of the robot arm can be moved in respect to the base section within a three-dimensional space into any desired position and orientation, referred to hereinafter as location.

Generally speaking, robot calibration is the process where software is used to enhance the position accuracy of a robot. Its aim is to identify the accurate kinematic properties of the robot that will establish precise mapping between joint angles and the position of the end-effector at the distal end of the robot arm in the Cartesian space. There could be many sources of error that result in inaccuracies of the robot position, including manufacturing tolerances during the production of the robot, thermal effects, encoder offsets, arm flexibility, gear transmission errors and backlashes in gear transmission.

Given the importance of high accuracy robots in many industrial applications, it is natural to have many researchers in the robotics community interested in this problem. The known methods are typically categorized into three levels, based on the error sources they address: (i) joint-level errors (e.g. joint offset), (ii) kinematic model errors, and (iii) non-geometric errors (e.g. joint compliance). The known approaches can further be classified into open-loop and closed-loop calibration methods.

When a calibration system for an industrial application is to be developed, a number of requirements are generally considered that are advantageous if they are fulfilled. Specifically, the system must be able to provide the actual kinematic properties of the robot with high accuracy, require low execution time, render the robot accurate in a large volume of the workspace, adapt to the available workspace for calibration, be robust to factory conditions, require minimum human interference to operate, be portable and of low-cost. Most of the aforementioned requirements stem from the fact that there is the need of calibrating the robot periodically in-line during production, that is during conventional operation of the robot.

The problem of robot calibration can be decomposed into four stages, namely (i) kinematic modeling, (ii) pose measurement, (iii) error parameter identification, and (iv) error compensation. An analysis of each one of them is presented below.

It is acknowledged that the kinematic model chosen for the calibration process should satisfy three basic requirements, specifically completeness, continuity and minimalism. The first requirement is imposed, as the parameters in the model must suffice to represent any possible deformation of the robot geometric structure. The second criterion is taken into account due to the fact that there must be an analogy between the changes in the geometric structure and changes in the parameters that describe them. In other words, the kinematic model must be such that it represents small changes in the geometric structure by small changes in its parameters. Finally, a kinematic model must be minimal, as it must not include redundant parameters, but limit itself to those that are necessary to describe the geometric structure.

The Denavit-Hartenberg (D-H) convention is regarded as a systematic approach which simplifies the modeling of the robot kinematic properties and fulfills in most cases the aforementioned considerations. According to the D-H convention, each link of the robotic arm is assigned four parameters, namely link length ($a_i$), link twist ($\alpha_i$), link offset ($d_i$), and joint angle ($q_i$).

While the D-H model is widely used in the robotics community, an issue arises when two consecutive joint axes are parallel or nearly parallel, due to the fact that small changes in the geometrical characteristics of the robotic links may result to abrupt changes in the values of the associated D-H parameters. Hayati et al. addressed this issue by modifying the D-H model and using an additional angular parameter $\beta$. However, for similar reasons as above, this approach is not suitable for modeling two consecutive perpendicular or nearly perpendicular joint axes. It is thus suggested to model the kinematic properties of a robot using the D-H parameters, and include Hayati et al. parameters for (nearly) parallel joint axes.

While other kinematic models have been suggested in the literature, such as the S-model by Stone et al. and the complete and parametrically continuous (CPC) model by Zhuang et al., the D-H and Hayati models dominate in the robotics community. It must be noted that the calibration model may not be restricted only to geometric parameters, but instead, be enhanced with elasticity factors (e.g. joint/link stiffness).

In the pose measurement stage, the robot moves to a number of poses, which typically satisfy some constraints (for example, the end-effector must lie in the field-of-view of the sensors or target a specific point in the environment etc.), and the joint angles are recorded. External sensors are used to give feedback about the actual location (position and orientation) of the end-effector, and these locations are compared with the predicted ones based on forward kinematics (using the joint angles recorded). The errors observed are recorded and will be used in the next stage (i.e., error parameter identification) to find those kinematic parameters that minimize them.

The most important factors for selecting the measuring system include the amount of human interference required, its cost, its execution time, and its performance in the factory environment. While it is not necessary to estimate the complete location of the end-effector to carry out calibration, measuring systems which extract the complete 6D location of the end-effector (position and orientation) enable calibration methods to use a smaller number of calibration locations (since more constraints are applied in each measurement).

It is noted that the set of calibration locations selected is important for the quality of the calibration methods. A different combination of locations is able to improve or worsen the results obtained.

Given the set of location measurements conducted in the previous stage, the respective errors between the predicted and the actual locations of the end-effector can be computed. The aim of this stage is now to determine the parameter values in the kinematic model that minimize this error, preferably in a least mean square sense. Many approaches have been suggested in the literature, with Levenberg-Marquardt being the most popular.

It is noted that a good initial guess for the actual values of the unknown parameters is important so that the parameter estimation algorithms to be efficient and converge quickly. It is thus suggested to assign to the kinematic parameters their nominal values at the start of the iterative optimization process, as the actual ones will not differ significantly.

It is common for many known methods to avoid changing the kinematic parameters in the robot controller. Instead, many known methods prefer to correct the position error through solving the inverse kinematics for the target Cartesian position of the end-effector using the new kinematic parameters - as identified in the previous stage - and sending to the controller the new joint angles.

It is an object of the present invention to propose a new calibration method and calibration system which is easy and cheap in its realization and which provides for a fast and highly accurate in-line calibration of an industrial robot.

This object is solved by a method for in-line calibration of an industrial robot of the above-mentioned kind characterized in that

- at least three light rays are generated by means of at least one light source rigidly connected to the distal end of the robot arm,
- at least one optical position sensor, which is adapted for determining in a two-dimensional plane the position of a light ray impacting the sensor, is located in a fixed location in respect to the robot's base section such that in a predefined calibration location of the distal end of the robot arm at least some of the light rays generated by the at least one light source impact on the sensor or on at least one of the sensors,
- the distal end of the robot arm is driven by means of control signals from a robot controller into a predefined calibration location, wherein at least some of the generated light rays impact on the sensor or on at least one of the sensors in certain positions,
- the positions, in which the generated light rays impact on the sensor or on the at least one of the sensors, is determined,
- the robot is driven by means of an iterative closed-loop control process such that the positions of the light rays which impact on the sensor or on the at least one of the sensors are moved into previously defined positions characterizing the calibration location of the distal end of the robot arm in a previous state of the robot,
- when the light rays which impact on the sensor or on the at least one of the sensors have reached the previously defined positions, characteristic parameters of the robot arm, in particular kinematic parameters of the robot, are determined, which unambiguously characterize the location of the distal end of the robot arm in the robot controller,
- the characteristic parameters determined are compared to corresponding previously defined characteristic parameters of the robot arm for these predefined positions, the previously defined characteristic parameters of the robot arm defining a kinematic model of the robot in the previous state,
- differences between the characteristic parameters determined and the corresponding previously defined characteristic parameters are used to update the kinematic model of the robot, and
- the updated kinematic model of the robot is adapted to be used during conventional operation of the robot to correct the original location of the distal end of the robot arm, the original location resulting from control signals issued by the robot controller during the conventional operation of the robot, into a more accurate location, which takes into account inaccuracies of the robot arm occurring during the conventional operation of the robot.

In order to enhance the information content of the characteristic parameters determined and in order to be able to update the kinematic model of the robot with a higher accuracy, according to a preferred embodiment of the invention, it is suggested that the light rays generated by the at least one light source extend in at least two orthogonal planes. Of course, the present invention works perfectly well even if this preferred embodiment is not realized.

In the present patent application the term "location" comprises a position (e.g. x, y, z in a Cartesian coordinate system) as well as an orientation (e.g. a, b, c around the x-, y-, z-axes) of the distal end of the robot arm. Another term "pose" is used for describing a certain status of the robot arm with the chain links and the joints being in certain positions, orientations and angles. Due to the high degree of freedom regarding the movement of the distal end of the robot arm of an industrial robot, it is possible that one and the same location of the distal end can be achieved with different poses of the robot arm.

The distal end of the robot arm can also be called the flange. An end effector (the actual tool with the tool center point TCP) is fixed to the flange.

The present invention refers to a particular advantageous method for in-line calibration of an industrial robot. It starts with driving the distal end of the robot arm by means of control signals issued by the robot controller to a previously defined calibration location (position and orientation). In the calibration position a plurality of light rays emitted by the light source impact on the two-dimensional sensitive surface of at least one optical position sensor. The sensor comprises, for example, a digital camera having a CMOS or a CCD chip as the sensitive surface, in cooperation with appropriate image processing software. The sensor may also comprise a position sensitive device PSD having a laminar semiconductor as a two-dimensional sensitive surface. The light rays could be directed in order to impact on one and the same PSD. In that case the optical position sensor would either be adapted to detect and determine the position of a plurality of light rays impacting the sensor contemporarily (e.g. like a digital camera) or alternatively (e.g. if the sensor was a PSD) the light source could be controlled in order to emit one light ray at a time, wherein the plurality of light rays is emitted sequentially, with the distal end of the robot arm remaining in the same calibration location during the emission of all light rays. It is also possible that the optical position sensors of the calibration system used in connection with the present invention comprise a combination of different two-dimensional sensor devices, for example PSDs and digital cameras.

It is suggested to use at least one optical position sensor and at least three light rays directed to the one or more sensors in the end-effector's calibration location or each of the calibration locations. In order to enhance the accuracy of the calibration method, for example two, or preferably at least three optical position sensors are used in the or each calibration location.

The calibration system can comprise one or more light sources. If the system comprises only one light source, this would be adapted to emit a plurality of light rays, for example by means of appropriate optics. If the system comprises a plurality of light sources each light source is adapted to emit one or more light rays. Furthermore, the calibration system can comprise one or more optical position sensors. If the system comprises only one sensor, the at least one light source is controlled such that the light rays impacting on the sensor are emitted one after the other. Even though the light rays are emitted sequentially, they are emitted for the same calibration position. For each light ray the iterative process for driving the distal end of the robot arm such that the light spot on the sensor moves towards the position of the previously defined light spot and the further steps of the method are executed. This is described in more detail below. If the system comprises a plurality of sensors the light rays are emitted contemporarily and the iterative process and the further steps of the method are performed contemporarily for all light rays impacting on the different sensors.

The robot controller generates and emits control signals to the robot's actors which cause the distal end of the robot arm to move into a previously defined calibration position. In the calibration position a plurality of light rays impacts at least one PSD contemporarily or sequentially. The position (x, y) of each light ray on the sensitive surface of the PSD is determined. Then in the course of an iterative closed-loop control process the distal end of the robot arm is moved by means of control signals issued by the robot controller such that the light spots generated by the light rays impacting the sensor(s) are moved towards previously defined positions of the light spots, which characterize the calibration location of the distal end of the robot arm in a previous state of the robot. The previous stage of the robot is, for example, a cold state of the robot, whereas the calibration method is executed in a later stage, when the robot has warmed up.

When the current positions of the light spots on the sensor(s) have reached the predefined positions characterizing the calibration location of the distal end of the robot arm in the previous state of the robot, the iterative process is stopped. The light spots are considered to have reached the predefined positions on the sensors if an error, for example a least mean square error, between the current positions of the light spots and the predefined positions has reached a minimum. Preferably, a sensitivity matrix (or Jacobian matrix) is used during the iterative process for moving the actual light spots towards the predefined positions of the light rays on the sensors, for determining the current position of the distal end of the robot arm. The sensitivity matrix will be described in more detail below.

Then, characteristic parameters of the robot arm are determined, which unambiguously characterize the location of the distal end of the robot arm in the robot controller. In particular, the characteristic parameters comprise, for example, the position (x, y, z) of the distal end of the robot arm and the rotation (a, b, c) of the distal end around the x-, y-, z-axes. The characteristic parameters can also comprise the angles $(q_1, q_2, ...., q_{NumberDOFS})$ of the robot arm's joints. Of course, it is possible to determine other characteristic parameters, too. It is emphasized that the position (x, y, z) of the distal end is different from the positions (x, y) of the light rays impacting on the optical position sensors.

The determined characteristic parameters are compared to the corresponding characteristic parameters which have been determined in that calibration location for the predefined positions of the light spots on the sensors in the previous state of the robot. The previously defined characteristic parameters of the robot define a kinematic model of the robot in the previous state. This kinematic model in the previous state of the robot corresponds to the robot signature. Differences between the characteristic parameters determined and the corresponding previously defined characteristic parameters are used to update the kinematic model of the robot. The kinematic model can comprise, for example, the Denavit-Hartenberg and/or the Hayati parameters. An initial approximation of the robot signature (i.e. nominal kinematic model)can be determined based on kinematic information obtained by the manufacturer of the robot. This information can comprise the number of links and joints of the robot arm, the type of joints (their degree of freedom), the length of the links, etc. The information can also consist of CAD-data regarding the robot.

During a subsequent conventional operation of the robot the robot arm is moved into a desired location by means of control signals issued by the robot controller. The movement of the robot arm into the desired position is based upon the updated kinematic model. In the updated kinematic model inaccuracies of the robot arm occurring during the conventional operation of the robot have been accounted for. Therefore, the use of the updated model during the conventional operation of the robot can correct the original location of the distal end of the robot arm, the original location resulting from control signals issued by the robot controller based on the nominal kinematic model. The corrected location of the distal end takes into consideration possible inaccuracies of the robot. Hence, with the present invention the accuracy of the robot can be significantly enhanced. The inaccuracies result, for example, from thermal effects and other mechanical inaccuracies of the robot's kinematic model.

The described calibration method for updating the kinematic model of the robot does not necessarily have to be executed all at once. For example, it would be possible to interrupt the conventional operation of the robot and to execute the described calibration method, but only for some of the calibration poses. Thereafter, the conventional operation of the robot can be continued, before after a while, the operation is interrupted and the described calibration method is executed again, but this time for different calibration poses than during the first interruption of the conventional operation. After some time and after a certain number of interruptions of the conventional operation of the robot and after a certain number of executions of the calibration method according to the present invention for different calibration poses, the kinematic model is updated. The advantage of this is that the conventional operation of the robot can be continued only interrupted from time to time only for a short time in order to execute the calibration method without any disturbance of the actual operation of the robot. So the present invention can be considered a true in-line calibration method.

Preferably, the sensitivity matrix is used for driving the robot by means of the iterative closed-loop control process such that the positions of at least three light rays which impact on the sensor or on the at least one of the sensors are moved into the previously defined positions characterizing the calibration location of the distal end of the robot arm in the previous state of the robot. The sensitivity matrix may be determined before the actual calibration of the robot during a previous state, e.g. a cold state of the robot.

Sensitivity matrix is computed by sending control signals issued by the robot controller to move the robot flange by small displacements for each degree-of-freedom (small translations dx', dy', dz' and rotations da, db, dc) and observing the changes in the sensor measurements of the $(x, y)$ positions. The displacements are initiated by control signals issued by the robot controller. The changes in the characteristic parameters (e.g. changes in the Cartesian coordinates of the distal end of the robot arm) are stored in the sensitivity matrix together with changes in the positions $(x, y)$ of the light rays impacting on the sensor or on at least one of the sensors resulting from the displacements of the distal end of the robot arm. Hence, the sensitivity matrix establishes logical links between the changes of the position of the light spots on the sensors on the one hand and the location (position and orientation) of the distal end of the robot arm on the other hand.

Furthermore, during the previous stage of the robot, additional information characterizing the robot can be acquired and stored. For example, for each calibration position and for each of the respective small displacements not only the changes in the location of the distal end of the robot arm but also the absolute position values of the distal end in respect to an external coordinate system can be acquired and stored. These absolute values can be stored in the robot controller on in any external computer.

The absolute values can be determined, for example, by means of a laser tracker located in a defined relationship to an external coordinate system and to the robot base. The laser tracker allows an exact determination of the position and orientation of the distal end of the robot arm in the calibration location and each of the small displacement locations, into which the distal end is moved during acquiring of the characteristic parameters and their changes, respectively, for the sensitivity matrix. Alternatively, if no laser tracker is available, it would also be possible to use the respective values of the position and orientation of the distal end of the robot arm in the calibration location and each of the small displacement locations, these values taken from the robot controller. Of course, these values are afflicted with slight inaccuracies but are still accurate enough for moving the distal end of the robot arm into the calibration location during the calibration method.

Preferably, the iterative closed-loop position control process is, for example, the so-called BestFit-process described in detail in DE 199 30 087 B4. The content of this document is incorporated into the present application by reference, in particular regarding the embodiment and functioning of the BestFit-process. The training phase mentioned in DE 199 30087 B4 corresponds to the acquiring of the values for the sensitivity matrix in the present invention. The image data mentioned in DE 199 30 087 B4, based upon which the sensitivity (or Jacobian) matrix is determined and the distal end of the robot arm is moved in order to move the current positions of the light spots on the sensors towards the previously determined positions of the calibration location, correspond to the position data $(x, y)$ the sensors generate depending on the current positions of the light spots. Of course, other closed-loop position control processes could be used, too.

Preferably, the at least one light source generates light rays within a frequency range of approximately $10^{13}$ to $10^{16}$ Hz, in particular having a wavelength of light visible for the human eye, in the range of 400 nm to 700 nm. However, the light source could also be adapted to generate IR- and/or UV-light rays. The at least one light source may comprise a laser for emitting a laser light ray or at least one semiconductor light source, in particular a light emitting diode LED.

Preferably, the calibration method described for only one calibration location is repeated for a plurality of calibration locations. A sensitivity matrix is determined for each of the calibration locations during the previous state of the robot. The differences of the characteristic parameters determined after the iterative closed-loop process for each of the calibration locations are used for updating the kinematic model of the robot. Furthermore, the method is preferably repeated for a plurality of different calibration poses of the robot arm for each calibration location, each calibration pose corresponding to certain angle values of the articulated joints of the robot arm. A sensitivity matrix is determined for each of the calibration poses during the previous state of the robot. The differences of the characteristic parameters determined after the iterative closed-loop process for each of the calibration poses are used for updating the kinematic model of the robot. The number of calibration poses needed for calibrating the robot depends on the complexity of the robot and the robot arm, respectively. In simple robot arm configurations or in situations where only part of the kinematic model of the robot is to be updated, even one calibration location and one or two corresponding calibration poses may be sufficient to calibrate the robot. In other cases more (e.g. at least five, preferably at least ten) different robot poses are used for determining all kinematic parameters of the robot in order to obtain a complete and precise updated kinematic model. Often, the kinematic model of a conventional industrial robot comprises at least 30 characteristic parameters. Each calibration pose provides for six equations and, hence, for the determination of at the most six robot calibration parameters. In order to compensate the influence of noise or other disturbances, it is suggested to choose the number of calibration poses such that the overall number of equations which can be formed in the various poses is much larger than the number of calibration parameters to be determined for the kinematic model of a certain type of robot.

It is possible that the calibration system comprises different sets of optical position sensors, each set comprising a plurality of sensors and being associated to at least one calibration location. This means that the generated light rays impact on at least some of the sensors of a first set of sensors in a first calibration location of the distal end of the robot arm and impact on at least some of the sensors of a second set of sensors in a second calibration location. Of course, it is possible that at least one of the sensors of the first set of sensors is identical to at least one of the sensors of the second set of sensors. Hence, the at least one sensor is part of the first set of sensors and of the second set of sensors.

Furthermore, the object is solved by a calibration system for in-line calibration of an industrial robot of the above-mentioned kind characterized in that the calibration system comprises means for executing the calibration method according to the present invention.

Finally, the invention proposes an industrial robot of the above-mentioned kind, characterized in that the industrial robot comprises a calibration system according to the present invention for effecting an in-line calibration of the robot.

Further features and advantages of the present invention are described and will become more apparent by the following detailed description of preferred embodiments of the invention and by taking into consideration the enclosed drawings. The figures show:

Figure 1    an example of an industrial robot which can be calibrated by means of the calibration system and the calibration method according to the present invention;

Figure 2    the workspace of the industrial robot according to Fig. 1;

Figure 3    the industrial robot according to Fig. 1 with its end effector in a certain calibration location and its robot arm in a first pose;

Figure 4    the industrial robot according to Fig. 1 with its end effector in the calibration location of Fig. 3 and its robot arm in a second pose;

Figure 5    a Position Sensitive Device (PSD) used in the calibration system according to the present invention;

Figure 6    a mounting device for supporting the PSD according to Fig. 5; and

Figure 7    an end-effector of the industrial robot according to Fig. 1 with three laser probes mounted thereto.

In the following the calibration system according to the present invention is described in enabling detail. The calibration system offers in-line compensation of inaccuracies in robotic applications. Further the system is portable, highly accurate, time-efficient and cost-effective. In the following the system and method are described using the example of thermal compensation. Of course the invention is not limited to the described example of thermal compensation. There are many sources of errors that result in inaccuracies of the robot position, including manufacturing tolerances during the production of the robot, thermal effects, encoder offsets, arm flexibility, gear transmission errors and backlashes in gear transmission. All these can be compensated by the calibration method and system according to the present invention.

Furthermore, the invention is not limited to special types of two-dimensional optical position sensors but could be used with any type of adapted sensor irrespective of its technical design and function, as long as it is adapted to detect and measure a two-dimensional position of a light spot generated by a light ray which impacts the sensitive surface of the optical position sensor. The sensors may be positions sensitive devices PSDs or digital cameras with an appropriate image processing system or any other type of optical sensor. It is also possible that if a plurality of sensors is used, the sensors can be of different types. It is further acknowledged that the invention is not limited to a certain types of light sources but can be used with any type of light source irrespective of its technical design and function, as long as it is adapted to emit a light ray in a frequency region comprising frequencies within the visible as well as within the invisible (e.g. IR- or UV-light rays) frequency regions. The light sources can be embodied as Lasers or LEDs or any other type of light source. It is also possible that if a plurality of light sources is used, the light sources can be of different types.

The core idea of this calibration system can be described as follows: Suppose that we have two robot states, namely $s_1$ and $s_2$, with $s_1$ being the robot state during the initial setup, where no thermal effects appear, and $s_2$ being its state after the occurrence of such effects. Given that thermal effects deform the robot kinematic properties, if we command the robot to move to the same joint angles Q in both states $s_1$ and $s_2$, the Cartesian location (position and orientation) of the end-effector X will differ ($X_{s1}(Q) \neq X_{s2}(Q)$). The same Cartesian location of the end-effector can then be obtained in the two states, if the robot is commanded to move, for each state, to slightly different joint angles, namely $X_{s1}(Q_1) = X_{s2}(Q_2)$, with $Q_2 = Q_1 + \Delta Q$. The calibration system according to the present invention is able to measure these angles $\Delta Q$, and to infer through them the deformations occurred in the kinematic model in state $S_2$.

In order to carry out the aforementioned procedure, we need: (i) a measurement process that records the locations of the end-effector, during the initial setup (so-called previous state of the robot), possibly with respect to an external frame of reference; (ii) a method for recovering the original location of the end-effector during the actual calibration process carried out after the measurement process, when the robot is in a different state and the kinematic model of the robot has changed, in order to measure the characteristic parameters, for example the joint angles $\Delta Q$ (in other words, we need a process that will be executed in state $s_2$ and return the joint angles $Q_2$ that will move the end-effector at pose $X_{s1}(Q_1)$); (iii) a process that will verify with high accuracy that the end-effector has recovered its original pose; (iv) a method to identify the error parameters in the kinematic model, given $Q_1$ and $\Delta Q$; and finally, (v) a process that will be able to compensate the deviations in the position of the end-effector, using the updated kinematic model, during the conventional operation of the robot.

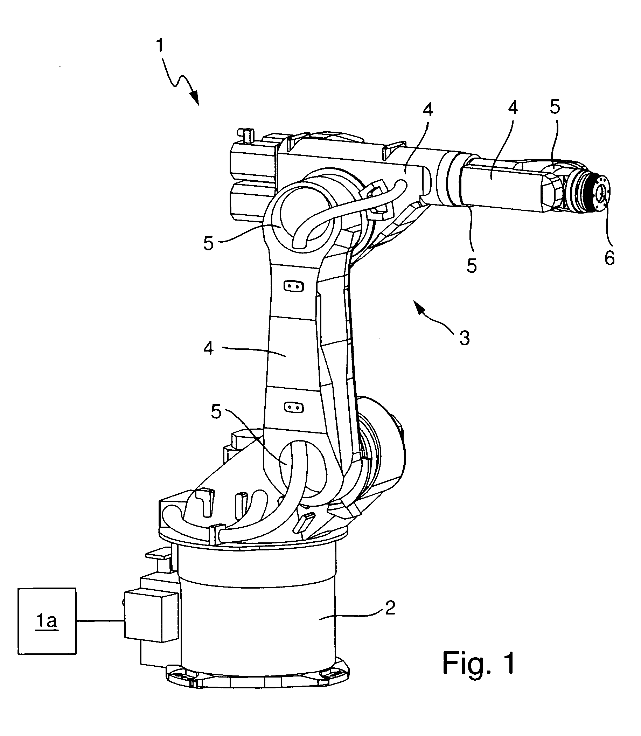

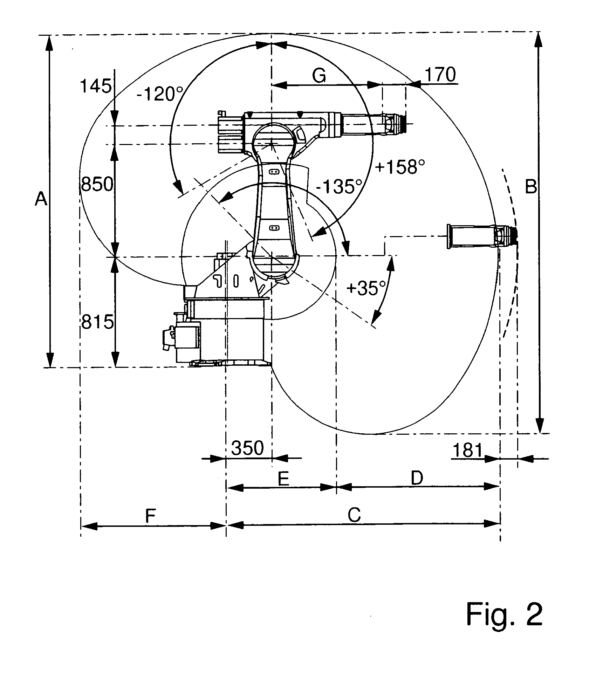

Fig. 1 shows an example of an industrial robot which is calibrated by the calibration system and method according to the present invention. The robot is designated with reference sign 1 in its entirety. The robot 1 comprises a fixed base section 2 and a robot arm 3 comprising multiple chain links 4 interconnected to one another by means of articulated joints 5. One of the articulated joints 5 connects the robot arm 3 to the fixed base section 2. A distal end 6 of the robot arm 3, the so-called flange to which the end-effector with the TCP is rigidly mounted, can be moved in respect to the base section 2 within a three-dimensional space into any desired position and orientation, referred to hereinafter as location. The possible movement of the robot shown in Fig. 1 is shown in Fig. 2, with the parameters being, for example: A=2498mm, B=3003mm,

C=2033mm, D=1218mm, E=815mm, F=1084mm and G=820mm. Of course, the present invention can be used for in-line calibration of other types of robots 1, too.

The calibration system according to a preferred embodiment of the present invention includes:

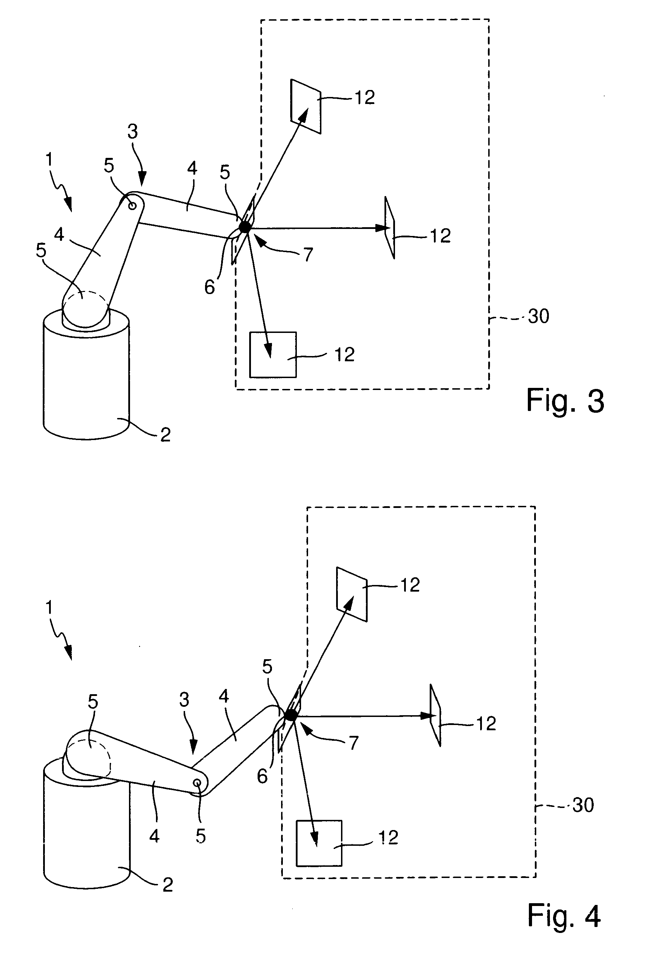

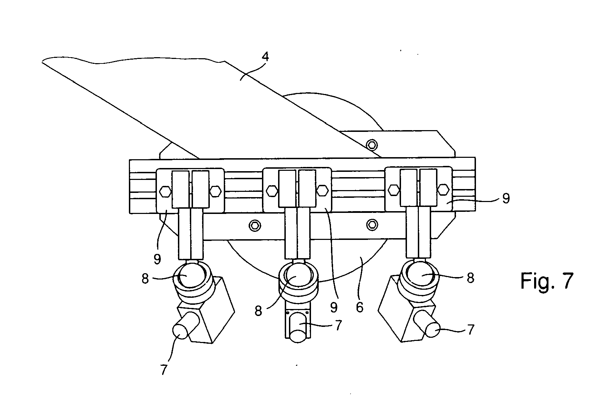

● Three light sources 7 (see Figs. 3, 4 and 7) embodied as laser probes in this special embodiment, which are fixed on the robot's end-effector 6. The rays emitted by the light sources 7 in this embodiment are controlled by a frame grabber. Of course, any other number or type of light source could be used, too. The light sources 7 are mounted on the end-effector 6 in a flexible way, which allows the user to select the position and orientation of the light sources 7 among a large set of combinations. This is accomplished by (i) mounting each individual light source 7 independently on the end-effector 6; (ii) using a spherical joint 8 between the light sources 7 and their bases (providing orientation flexibility); and, (iii) using a Rose-Krieger flange clamp 9 with a tube that provides flexibility on the horizontal and vertical movement of the light sources 7. This is shown in detail in Fig. 7. Of course, any other type of fixing mechanism for flexibly mounting the light sources 7 to the end-effector 6 can be used, too. If the light sources 7 have been brought into their desired position and orientation, they are fixed to the end-effector 6, so the relationship between the light sources 7 and the end-effector 6 is constant throughout the entire measurement process and the subsequent actual calibration process.

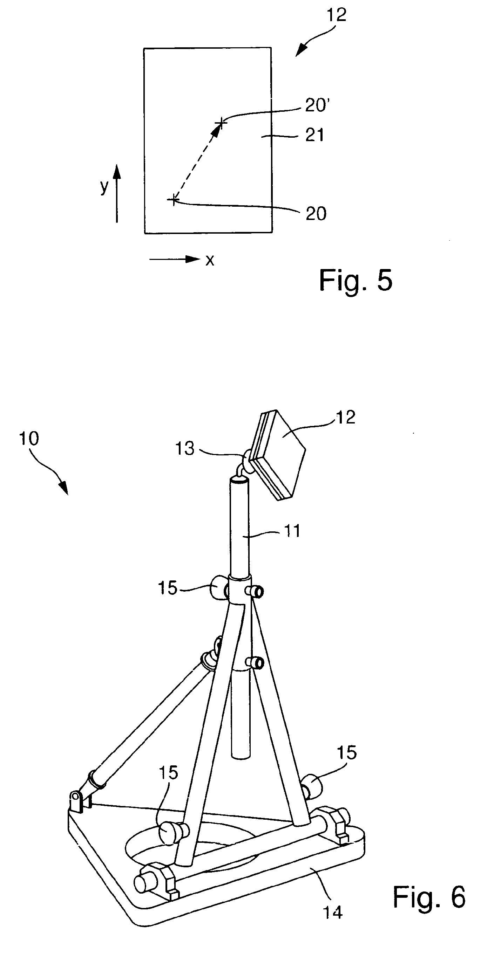

● At least one two-dimensional optical position sensor 12. In this special embodiment there are three sensors 12 embodied as position sensitive devices, referred to hereinafter as PSDs 12 (see Figs. 3, 4, 5 and 6). Of course, the two-dimensional sensors 12 could be of any other type or number, too. The sensors 12 comprises a two-dimensional sensitive surface 21, upon which the light rays emitted by the light sources 7 impact. The sensors 12 are adapted to determine the position of the light spot created by the light ray impacting the sensitive surface 21. Each PSD 12 is connected to the necessary electronic equipment, namely an amplifier and a display unit (not shown). The amplifier processes the photocurrent generated by the PSD 12 and returns the x, y analog outputs which are directly proportional to the light beam position 20, 20' on the sensor's surface 21 (see Fig. 5), independently of changes in the beam intensity. The optional display unit can receive the x, y analog voltage(s) output from the amplifier and converts them into a corresponding absolute position in millimeters. The display unit, for example a backlit LCD, displays the positions with high resolution. Finally, the equipment may include optical filters, for example band pass filters, for the PSDs 12 in order to block the ambient light and reduce the noise.

● The setup also includes mounting devices 10 for the PSDs 12 (see Fig. 6), in order to locate them in fixed locations in respect to the robot's base section 2. The preferred features set for the design of these mounting devices 10 are (i) to provide flexibility in the 6D positioning of the PSDs 12, (ii) to maintain the sensors 12 stable, unaffected by changes in the ambient temperature; (iii) to be self-supporting; and (iv) to be portable. It is noted that feature (i) is only of importance for allowing a variation of the location (position and orientation) of the PSDs 12 in order to make sure that the light rays generated impact on the PSD surfaces 21 in the calibration locations of the end-effector 6. Once this is assured, the PSDs 12 are firmly fixed in their location in respect to the robot's base section 2.

The preferred features (i) to (iv) are satisfied by the design illustrated in Figure 4. More specifically, feature (i) is satisfied by the fact that the mounting device 10 can be set anywhere on the floor (thus, x and y offsets can be adjusted), the tube 11 that links the PSD 12 with the main body of the device 10 can be set at variable height, and the PSD 12 is mounted to the aforementioned tube 11 with a spherical joint 13, providing orientation flexibility. Feature (ii) is satisfied by the fact that the device 10 is made by a thermally stable material, for example NILO® Alloy 36. As far as feature (iii) is concerned, the mounting device 10 is self-supporting by being positioned on a triangular base 14. It is noted that the base 14 can be detached from the device 10, and the device 10 can be fixed directly to the floor, the structure of a measuring cell or the like. Finally, the device 10 is designed to have a small size and a light weight in order to be portable, and has mounting positions for so-called Spherically Mounted Retroreflectors (SMRs) 15 for allowing the use of a laser tracker to obtain absolute coordinates in a common frame of reference. If the robot base 2 is located in respect to the common frame of reference, too, the laser tracker can be used to determine the location of the device 10 in respect to the robot base 2. Of course, any other type of mounting device 10 can be used for fixing the sensors 12 in respect to the robot's base section 2.

As has been discussed, a common approach followed in the literature for modeling the kinematic properties of a robot and for obtaining a kinematic model of the robot are the Denavit-Hartenberg (D-H) parameters. An issue arises, however, with this model when two consecutive joint axes are parallel or nearly parallel. In this case, small changes in the geometrical characteristics of the robot links or joints may result in abrupt changes of the values of the corresponding D-H parameters. Hayati et al. addressed this issue by modifying the D-H model and using an additional angular parameter $\beta$. This parameter is included in the model, only for those two consecutive joint axes that are (nearly) parallel. An example for the D-H/ Hayati parameters extracted for the robot shown in Fig. 1 are shown in the below Table 1.

Table 1: The D-H/Hayati parameters for a robot

| Ref Frame i | $a_{i-1}$ (radians) | $L_{i-1}$ (mm) | $d_{i-1}$ (mm) | $\theta_{i-1}$ (radians) | $\beta_{i-1}$ (radians) |
|---|---|---|---|---|---|
| Joint 1 | n | 0 | -815 | $\theta_1+\pi$ | - |
| Joint 2 | n/2 | 350 | 0 | $\theta_2$ | - |
| Joint 3 | 0 | 850 | - | $\theta_3-\pi/2$ | 0 |
| Joint 4 | n/2 | 145 | -820 | $\theta_4$ | - |
| Joint 5 | -n/2 | 0 | 0 | $\theta_5$ | - |
| Joint 6 | n/2 | 0 | 0 | $\theta_6+\pi$ | - |
| End-Effector | 0 | 0 | -170 | 0 | - |

The transformations that relate the position and orientation of frame i with respect to frame i-1 are given by:

$$^{i-1}T_i = Rot_x(a_{i-1}) \cdot Transl_x(L_{i-1}) \cdot Rot_z(\theta_{i-1}) \cdot Transl_z(d_{i-1})$$

where $Rot_j(u)$ and $Transl_j(u)$ denote the rotation and translation along axis $j$ by $u$, respectively. For the non-parallel consecutive axes (thus, for all pairs of axes besides the transformation between joint axes 2 and 3), the transformation $^{i-1}T_i$ is given by:

$$^{i-1}T_i = \begin{bmatrix} \cos(\theta) & -\sin(\theta) & 0 & L \\ \cos(a)\cdot\sin(\theta) & \cos(a)\cdot\cos(\theta) & -\sin(a) & -d\sin(a) \\ \sin(a)\cdot\sin(\theta) & \sin(a)\cdot\cos(\theta) & \cos(a) & d\cos(a) \\ 0 & 0 & 0 & 1 \end{bmatrix}$$

where the *D-H* parameters correspond to joint axis *i-1*. For the pair of joints 2 and 3, the transformation is given by using the Hayati parameter $\beta$ instead of parameter d:

$$^{2}T_3 = \begin{bmatrix} \cos(\beta)\cdot\cos(\theta) & -\cos(\beta)\cdot\sin(\theta) & \sin(\beta) & L \\ \sin(a)\cdot\sin(\beta)\cdot\cos(\theta)+\cos(a)\cdot\sin(\theta) & -\sin(a)\cdot\sin(\beta)\cdot\sin(\theta)+\cos(a)\cdot\cos(\theta) & -\sin(a)\cdot\cos(\beta) & 0 \\ -\cos(a)\cdot\sin(\beta)\cdot\cos(\theta)+\sin(a)\cdot\sin(\theta) & \cos(a)\cdot\sin(\beta)\cdot\sin(\theta)+\sin(a)\cdot\cos(\theta) & \cos(a)\cdot\cos(\beta) & 0 \\ 0 & 0 & 0 & 1 \end{bmatrix}$$

The location (position and orientation) of the end-effector 6 with respect to its base frame can be computed through forward kinematics, namely:

$$^{0}T_{EE} = {}^{0}T_1 \cdot {}^{1}T_2 \cdots {}^{5}T_6 \cdot {}^{6}T_{EE}$$

Of course, other transformations could be applied, too, depending on the type of the robot 1 used (e.g. type of joints, number of degrees of freedom DOF), as well as depending on the definition of the kinematic model of the robot 1 used.

The relation between the characteristic parameters and the values of the kinematic model, for example the D-H/Hayati-parameters, is the following: For joint angles Q = (q1, q2, ... q6), it can be computed where the end-effector 6 is located in the Cartesian space (x, y, z, a, b, c) if we know the kinematic model of the robot (e.g. the D-H/Hayati parameters). When the robot 1 is not calibrated, the robot controller 1a uses the nominal kinematic model (that is only in approximate correct), and for the joint angles (q1, q2, ... q6) can predict only in approximate where the end-effector 6 is in the Cartesian space. While after calibration, with the kinematic model updated and accurate, the robot 1 can be operated with high accuracy, for given joint angles (q1, q2, ..., q6) what are the actual Cartesian coordinates (x, y, z, a, b, c) of the end-effector 6.

According to the described preferred embodiment, the calibration procedure is carried out in three stages. First, there is an initial setup stage where the reference calibration locations of the end effector 6 and the reference calibration poses of the robot arm 3 are selected, training data are collected and the robot signature comprising kinematic parameters of the robot in its initial state (e.g. in its cold state) is computed. This process is carried out off-line and only during the initial setup of the system. The second stage takes place during the operation of the robot 1 in a different state (e.g. in its warmed up state), collecting periodically in-line measurements and updating the kinematic model. The last stage is carried out while the robot 1 operates conventionally and performs its actual task, and serves for correcting any location deviations of the distal end 6 of the robot arm 3 due to thermal effects or other inaccuracies in the robot's mechanics, using the updated kinematic model. The various stages of the calibration method are described below in more detail.

The main processes performed during the initial setup are the selection of calibration locations of the end effector 6 and the corresponding calibration poses of robot arm 3, the pose measurement with respect to an external frame of reference, the collection of training data (the result of location measurements) that will be used for recovering the original Cartesian location of the end-effector 6 after the occurrence of thermal effects or other sources of error, as well as the identification of the robot signature. Each one of these processes is described in detail in the following.

In the process of reference pose selection, firstly potential locations of the end-effector 6 are identified, which could be used as calibration locations during the calibration. The constraint that these locations in this embodiment should satisfy is for the three light sources 7 mounted on the end-effector 6 to point simultaneously to the areas 21 of three sensors 12. While all of these locations could theoretically be used during calibration, there are time constraints imposed to the system in order to be practical for in-line application. Therefore, a subset of N possible locations is kept, with N being (i) large enough to provide sufficient information for calibrating the robot 1; and (ii) small enough to render the calibration process practical for in-line operation, in terms of execution time.

For example, Figs. 3 and 4 show the end effector 6 in the same predefined calibration location with the three light sources 7 emitting light rays which hit the surfaces 21 of the three sensors 12. However, although the end effector 6 is in the same location, the robot arm 3 has two different calibration poses in Figs. 3 and 4. Hence, at least one of the chain links 4 and/ or of the articulated joints 5 in Fig. 4 is in a position and/ or orientation differing from that of Fig. 3.

In order to select the N locations which maximize the provided information on the kinematic errors, an algorithm is implemented that takes as input a set of candidate calibration locations, and by means of a search process identifies the subset of locations (N in size) which optimizes an evaluation criterion. In the present example, the maximization of the minimum singular value of the identification Jacobian matrix has been chosen as evaluation criterion. Of course, other evaluation criteria could be used, too. Various search processes can be used, including but not limited to, genetic algorithms, simulated annealing, or local search methods with multiple iterations for checking various initial conditions (in order to avoid local maxima)..

During the initial setup, the Cartesian location of the end-effector at the various reference robot poses Q can also be recorded with another external frame of reference, for example by means of a laser tracker, a Coordinate Measuring Machine CMM or a similar tool, in order to associate measurements in the optical sensors with the absolute coordinates of the distal end of the robot arm (as measured by the external tool - e.g. laser tracker). Given that three light sources 7 have been mounted to the robot 1 that point towards the three sensors 12, this can be achieved by recording at each calibration location the 2D coordinates x, y of the light spots 20' on the three PSDs' surfaces 21. For the further description, the position of these spots 20', as recorded during the initial setup, will be called nominal positions, and will be denoted by $F_0(Q)$. Thus, in the present embodiment $F_0(Q_i)$ is a 6x1 vector that includes in a concatenated manner the respective (x, y) coordinates of the light spots 20' on the three PSDs 12, when the robot 1 and the robot arm 3, respectively, is at pose $Q_i$ during the initial setup, when the robot 1 is in its so-called previous state (e.g. a cold state).

The sensitivity matrix is an image Jacobian matrix in this example. It is assumed that m image features are detected by a camera as described in DE 199 30 087 B4. F is to be the position of the features observed in image coordinates (thus, F is a 2mx1 vector), and X is to be the 6D Cartesian location of the camera. Also $F_0$ is to be the nominal position of the image features, as observed when the camera location is $X_0$. Naturally, if the camera is at pose $X_0+dx$, the image features will be observed in position $F_1 = F_0+df$. The sensitivity matrix has the capacity to give an estimation of dx (namely, the deviation of the camera from its nominal location), when the image features are observed at $F_1$. More specifically,

$$dx = J^* \cdot df,$$

where J* is the Moore-Penrose pseudoinverse of the sensitivity matrix J. It should be noted that the sensitivity matrix assumes a linear relation between dx and df, which is true in approximate and only in a region close to the nominal pose $X_0$. Hence, a different sensitivity matrix should be used for distinct nominal locations of the camera. In general, there are two common approaches to produce a sensitivity matrix for the respective nominal location, namely (i) the analytic approach, which necessitates knowledge of accurate geometric properties of the setup; and (ii) the training approach, where the camera moves in various poses around its nominal position, records - for known dx - the changes observed in df, and computes the sensitivity matrix that best fits df to dx.

In the present setup, the same concept is used, with the only difference being that the 2D coordinates x, y of the centers of laser spots 20' on the PSDs 12 are observed, instead of the image coordinates of certain features gathered by a camera. In order to produce a sensitivity matrix for each calibration pose and for each calibration location, the training approach described above during the initial setup is followed.

A further process that takes place during the initial stage is the identification of the robot signature. This means that the true kinematic parameters of the robot 1, which define the robot's signature, are identified. While the manufacturer of industrial robots 1 provides the same kinematic model for all robots 1 of the same type (nominal kinematic model), this is valid only in approximate, as the true kinematic model differs between different robot units of the same type due to manufacturing inaccuracies, the effect of aging, thermal effects etc.

According to a preferred embodiment of the invention, a laser tracker or a similar tool is used in this stage for associating nominal values in PSDs 12 with the corresponding absolute positions in a Cartesian coordinate system. The use of the laser tracker is described in more detail below. Its usage is necessary only during the installation phase of the system. However, the present invention would work perfectly well without a laser tracker. In that case the values of the kinematic parameters in the current calibration location and possibly the current calibration pose of the robot arm 3 are not determined as absolute values by means of a laser tracker or a similar tool but rather based on the possibly error afflicted values taken from the robot controller 1a.

The next stage (corresponding to the actual robot calibration) is carried out in-line (i.e. during the robot's normal operation), and (i) collects measurements - namely, the respective $\Delta Q$ for each calibration location - that will be used for updating the robot's kinematic model; and (ii) identifies the errors in the kinematic model of the robot 1. The two main steps executed in this stage are the location recovery process and the error identification process.

For the location recovery process, it is assumed that the robot 1 is at state $s_2$, that is in its state after the occurrence of parasitic effects, where for example thermal effects have deformed the mechanical components of the robot 1 leading to inaccuracies in the kinematic model. The location recovery process is responsible, for each reference pose $Q_{i1}$, to measure the corresponding joint angles $Q_{i2}$ or other characteristic parameters that will drive the end-effector 6 to its original Cartesian location (as measured in the previous robot state $s_1$) , namely $X_{s1}(Q_{i1}) = X_{s2}(Q_{i2})$ . It is noted that $Q_{i2}$ is expected to be close to $Q_{i1}$.

In order to achieve that, the robot 1 is instructed by a robot controller 1a to move to each of the predefined calibration locations and into each of the calibration poses. Suppose that the robot 1 is at reference pose $Q_{i1}$, with the three light sources 7 - which are mounted on the robot's end-effector 6 - pointing to the three PSDs 12 at the actual positions 20. The measurements from the PSDs 12 will return the vector $F(Q_{i1})$ . As discussed above, the nominal positions 20' of the three light spots in the respective calibration location in the calibration pose $Q_{i1}$ are given by $F_0(Q_{i1})$ . In case less than three sensors 12 for each calibration location are used, and thus, two or more light rays point to the same sensor 12, the vector $F_0(Q_{i1})$ can be extracted by switching on/off with a time controller the light sources 7. The difference between $F(Q_{i1})$ and $F_0(Q_{i1})$, along with the sensitivity matrix for the specific pose (i.e. $J(Q_{i1})$), will return what should be the relative movement dx of the end-effector 6, in order to recover its original, previously defined location $X_{s1}(Q_{i1})$, in which the actual position 20 of the light spots would correspond to the previously determined and stored nominal position 20':

$$dx = J^*(Q_{i1}) \cdot [F_0(Q_{i1}) - F(Q_{i1})]$$

This is an iterative process, where the measurements of the actual position 20 on the PSDs 12 are updated, until the end-effector 6 reaches the Cartesian location $X_{s1}(Q_{i1})$ and the actual position 20 of the light spot(s) is as close as possible, preferably identical, to the nominal position 20'.

Depending on the time constraints, the recovery process can be executed either consecutively for all calibration locations, or with interruptions (during which the robot 1 can be conventionally operated), collecting measurement data for each calibration location sparsely (that is for example, the robot collects data for two calibration locations, then it returns to its normal operation, then back to collecting data from additional two calibration locations, and repeating that until sufficient data is collected from the required number of locations).

Preferably, backlash effects are addressed in order to achieve accurate calibration data. In particular: (i) the robot 1 is driven to the calibration pose, always starting from the same home position, making first a relative joint movement. This relative movement should move the joints 5 in the same direction, as they are moving when going from the calibration pose to the home position; (ii) the iterative closed-loop control process used for moving the laser spots 20 in the direction of the nominal positions 20' and thereby guiding the end effector 6 in its predefined calibration location can be carried out in multiple stages with hysteresis compensation.

The aim of the error identification process is (i) to identify the errors in the kinematic model of the robot 1 and (ii) to update its kinematic parameters. It has been designed to take as input the outcome of the location recovery process described above, for example (i) the set of joint angles ($q_1, q_2, ..., q_{NumberDOFs}$) or the positions (x, y, z) and the orientation (a, b, c) around the x-, y-, and z-axes, that drive the end-effector 6 to the calibration location in the initial setup (i.e. $Q_{i1}$) - if a laser tracker or a similar tool is available in the initial setup, then the values (x, y, z, a, b, c) are given by this measurement tool, instead of the robot controller 1a; and (ii) the respective set of joint angles or position and orientation values (as provided by the robot controller 1a) that currently move the end-effector 6 at the same Cartesian location (i.e. $Q_{i2}$), where thermal effects or other sources of errors or inaccuracies may have occurred and the robotic kinematic model has been changed. In the present system, the error identification process is handled as an optimization problem, where the kinematic parameters under calibration, including - for example - the values of the Denavit-Hartenberg/ Hayati parameters (defining the kinematic model of the robot 1), that minimize the error between predicted and actual location of the end-effector 6 are searched for.

In particular, the concept of the identification Jacobian matrix is used, which expresses the resulting changes that should be expected in the Cartesian location of the end-effector 6, when small changes occur in the kinematic parameters of the robot 1. Let $J_{id}(Q)$ denote the identification Jacobian matrix at calibration pose Q, and X(Q) denote the Cartesian position of the end-effector 6 with respect to the robot base 2 at pose Q, as given by the current estimation of the kinematic model. Given that the measured Cartesian position of the end-effector 6 at pose $Q_{i2}$, for the current warmed up state of the robot 1 (pose of the robot arm 3), is given by the original position at $Q_{i1}$, namely $X(Q_{i1})$, the error between predicted and measured Cartesian location of the end-effector 6 can be expressed as:

$$DP = X(Q_{i1}) - X(Q_{i2})$$

The value of $X(Q_{i2})$ is computed based on forward kinematics and the system's belief of the current kinematic model parameters. For absolute calibration, and given that a laser tracker or a similar measurement tool has been used in the initial stage, the value $X(Q_{i1})$ has been measured directly and stored during the installation phase using the measurement tool (e.g. the laser tracker or a similar tool). If we denote by DV the errors in the kinematic parameters, then:

$$DP = J_{id}(Q_{i2}) \cdot DV$$

As will be seen below, the value of the identification Jacobian matrix depends on the joint angles, as well as the current belief of the kinematic parameters. Therefore, the above equation is solved with respect to DV iteratively, updating - at each iteration - the values of $J_{id}$ and DP. The iterative updating of DP is given by:

$$DP = X(Q_{i1}) - W$$

where W is the current belief for the location of the end-effector, as computed based on forward kinematics and the updated kinematic model from the previous iteration.

It is noted that the above equation is actually solved by concatenating the vector DP and the matrix $J_{id}$, by adding new rows for each calibration location/ pose. For a single calibration pose, the identification Jacobian $J_{id}$ is a 6xM matrix, where the rows correspond to the degrees of freedom in the Cartesian space of the end-effector, and the columns correspond to the M kinematic parameters under calibration. If the number of calibration poses used is N, then the number of rows in the identification Jacobian will be 6N. Of course, a similar process can be followed if a smaller number of degrees-of-freedom of the end-effector 6 is considered. In that case just fewer rows need to be added in the identification Jacobian matrix.

In the third stage of error compensation it is assumed that the robot 1 has already been calibrated (as described above). The updated kinematic model is used for correcting inaccuracies that may appear in the position of the robot 1 and the location of the end effector 6, respectively, during its conventional operation.

More specifically, again $s_1$ is the robot state during the initial setup, where no thermal effects and other effects due to other inaccuracies appear, respectively, and $s_2$ is the robot's current state, where such effects have occurred, as previously defined. The aim is to find the joint angles $Q_2$ or other characteristic parameter values that will drive the end-effector 6 in state $s_2$ at the same Cartesian location with $X_{s1}(Q_1)$, that is $X_{s1}(Q_1) = X_{s2}(Q_2)$. While in the calibration stage these angles $\Delta Q = Q_2 - Q_1$ were measured for the reference poses as part of the calibration process, now they have to be computed/ predicted for all end effector locations and robot arm poses in the robotic workspace using the updated kinematic model. In the following it is assumed on an exemplary basis that the characteristic parameters are joint angles $Q_i$. Of course, the explanations are valid for other characteristic parameters just the same.

In order to achieve this, at least three control points $c_i$, with $i \in [1,3]$ at the reference frame of the end-effector 6 are used. $X_{s_k}^{c_i}$ denotes the Cartesian coordinates of the control point $c_i$ at state $s_k$. Then, the end-effector's location at state $s_k$ can be represented by $X_{S_k}$ (a column vector 9x1), where:

$$X_{s_k} = \begin{bmatrix} X_{s_k}^{c_1} \\ X_{s_k}^{c_2} \\ X_{s_k}^{c_3} \end{bmatrix}$$

Now the joint angles $Q_2$ can be computed by using the basic Jacobian $J$. In particular, the equation below with respect to $\Delta Q$ is iteratively solved until the difference $X_{s_1}(Q1)-X_{s_k}(Q)$ is equal to zero (or a negligible minimum):

$$X_{s_1}(Q_1) - X_{s_k}(Q) = J(Q) \cdot \Delta Q$$

where $X_{s_1}(Q1)$ is the target location we want to drive the end-effector 6 in the robot's workspace (for example, the target poses could be taught during the initial setup or given in the format of absolute coordinates), $X_{s_k}(Q)$ is the position estimation of the end-effector 6 at the current state $s_k$ for joint angles $Q$ using forward kinematics and the updated kinematic model, $J(Q)$ is the basic Jacobian at pose $Q$, $\Delta Q$ is the emerging solution at each iteration of the equation, and $Q$ is updated in each iteration based on $Q_1$ and $\Delta Q$ .

Summing up, in the following the main aspects of the invention are briefly described once more. The aim is to move a robot 1 iteratively to a Cartesian location T* for many operation cycles. When programmed, the accuracy is not satisfactory for two main reasons: (i) absolute position inaccuracies, and (ii) thermal effects.

This means that the robot 1, even when it is still "cold", when instructed to move to Cartesian location T*, will instead move to T*+dA. This is due to the fact that the robot controller 1a computes the control signals (e.g. joint commands) that will move the end-effector 6 to location T*, based on a nominal kinematic model that has been provided by the robot manufacturer for the specific robot type or calculated in any other way for the specific robot. However, the actual kinematic model differs between different robot units, even for robots 1 of the same type (due, for example, to manufacturing tolerances when producing the robots 1). Thus, the joint angles or the values of other characteristic parameters - computed from the robot controller 1a for moving the robot 1 to location T* using the nominal kinematic model - will actually move the robot to location T = T*+dA, wherein dA reflects the differences between the actual kinematic model and the nominal kinematic model.

As mentioned above, a second reason for inaccuracies is due to thermal effects. These effects cause the kinematic model of the robot 1 to temporarily change (e.g. links 4 to be elongated), and thus, result in deviations of the Cartesian location T of the robot 1 during its operation. If this thermal error is denoted by dB, then the actual robot location T will therefore be T = T*+dA+dB. It is noted that the thermal error dB changes during the operation of the robot 1, depending on the robot's thermal state.

The aim of the calibration system according to the present invention is to minimize the drift dA+dB in-line (during conventional operation of the robot 1) and to guide the robot 1 with particularly high accuracy to the desired Cartesian location T*. This is achieved by (i) identifying in-line the changes in the kinematic model of the robot 1, and (ii) computing the actual joint angles Q_act or any other characteristic parameter that will move the robot 1 to location T* based on an updated kinematic model. Thus, while the robot controller 1a would believe that joint angles Q would move the robot 1 to Cartesian location T*, but the end effector 6 would actually be moved to location T, instead the robot 1 is instructed to move at joint angles Q_act in order to minimize the drift dA+dB and to actually move to location T* .

Principally, the method is carried out in two stages. The first stage takes place off-line when the system is setup, for example when the robot 1 is still "cold". During this stage some reference values and training data are collected that will be used in the second stage. The second stage takes place in-line during conventional operation of the robot 1 and is responsible for gathering calibration data for updating the kinematic model and for computing the joint angles Q_act that will drive the end-effector 6 of the robot 1 constantly to the desired Cartesian locations T* in absolute space, independently of the parasitic changes made to the kinematic model.

It is important for the calibration system to measure in-line with an external reference frame (provided by the PSDs 12 or by other types of optical position sensors) the angles of the joints 5 that move the robot arm 3 into predefined poses with known Cartesian coordinates of the predefined location of the distal end 6 in absolute space. In particular, according to an embodiment of the invention for each calibration pose of the robot arm 3, in which calibration data is collected:

(i) There are three spots on the PSDs surfaces 21 due to the incident rays from the laser probes 7. Given that there are three spots in total, and two-dimensional coordinates for each spot, six equations can be formulated, and thus, the relative Cartesian pose of the robot 1 with respect to the PSDs 12 can be determined. Given that the position and orientation of the PSDs 12 and the laser rays has not been registered, the only information received is the following: If two robot poses have the same spot coordinates on the PSD surfaces 21, then these poses will be the same, namely they will have exactly the same Cartesian coordinates. It is noted, however, that the values of these Cartesian coordinates cannot yet be extracted. This is addressed using the laser tracker, a CMM or a similar tool. It is noted that the three spots could also be measured by pointing multiple light rays to a single PSD 12.

(ii) The laser tracker or a similar tool can measure the absolute coordinates of the distal end 6 of the robot arm 3 in Cartesian space of any robot pose.

Combining the items (i) and (ii), using both the laser tracker or a similar tool and the hardware device of the calibration system (comprising laser probes 7/ PSDs 12), we can move the robot 1 into various poses where the laser rays point to the PSDs 12 and hit the sensitive surfaces 21. Then, for each pose, the following procedure can be executed:

- For each pose, the respective spot coordinates on the PSDs 12 are recorded. These values are called nominals.
- For each pose, the absolute coordinates in Cartesian space of the distal end 6 of the robot arm 3 (flange or end effector, respectively) are measured and recorded using the laser tracker with the corresponding locations of the PSDs 12.

After having performed this procedure, for each calibration pose the nominal spot coordinates of the PSDs are associated with absolute coordinates in Cartesian space. Thus, the laser tracker is needed only during the installation phase of the system in order to establish the correspondence of PSD spot coordinates with absolute Cartesian coordinates.

After the installation phase, while the robot is conventionally operating and the calibration system works, the calibration can be continued without the laser tracker. In particular, for each calibration pose, the new joint angles that will result in the same nominal spot coordinates and thus, in the same Cartesian coordinates in absolute space, can be measured by applying the closed-loop control iterative process. Based on the mapping described above, i.e., between spot coordinates and laser tracker data, it is known at any time which joint angles will result in the known Cartesian coordinates in absolute space.

In the following the two stages of the calibration method, namely the initial setup and the in-line process, are described.

The initial set-up stage takes place without running production (offline before the conventional operation of the robot 1), when the system is installed for the first time. In this stage, the robot is assumed to be "cold", while it is assumed that a laser tracker is available. The following steps are executed:

- Select N reference poses in which three of the laser probes 7 point to the three PSDs 12 (multiple inverse solutions are also included in the set of reference poses).
- For each reference pose, record the joint angles of the reference pose, as well as the respective spot coordinates of the laser rays on the PSDs 12. Let the joint angles be Q1 (i) for the i-th reference pose and F(i) the respective spot coordinates. The spot coordinates recorded here are called nominals.
- For each reference pose, measure with the laser tracker the absolute Cartesian coordinates of the distal end 6 of the robot arm 3. Let X(i) be the Cartesian pose of the i-th reference pose.
- For each reference pose, produce a Jacobian matrix (sensitivity matrix) that associates changes in the Cartesian pose of the distal end 6 (either as given by the robot controller 1a or by the laser tracker) with changes in the spot coordinates. This is the training stage of the iterative closed loop process according to DE 199 30 087 B4, where known step movements for each degree of freedom are performed, and the changes in the spot coordinates are observed.

The in-line process stage is carried out while the robot 1 is operating, and the aim is to minimize the drift dx = dA+dB mentioned above. In this stage, the laser tracker is not required anymore. The main steps include: (i) Collection of calibration data; (ii) Error Identification; and (iii) Error Compensation. Below, each one of these steps is described:

Between operation cycles of the robot 1, calibration data is collected by instructing the robot 1 to move to the area of the PSD 12. In particular, for each reference pose that has been recorded in the initial setup the procedure given below is followed:

- Instruct the robot to move to a reference pose Q1 (i), as defined and used in the Initial Setup stage.
- Given that the kinematic model has been deformed, the Cartesian pose of the distal end 6 of the robot arm 3 will have a drift X(i)+dx. This will result in having different spot coordinates in the PSDs 12 than the nominal ones F(i)+dF. Apply the iterative fitting process of DE 199 30 087 B4 until the same spot coordinates F(i) are received from the PSDs, as those which had been previously recorded as nominals in the initial stage. Typically, three iterative steps suffice, having activated a so-called hysteresis compensation (i.e., before performing the correction provided by the iterative fitting process in each step, the robot 1 is moved to a defined home position).
- When the iterative fitting process is finished, the final joint angles Q2(i) are recorded. Thus, it is known that the robot kinematic model has deformed, and that the absolute Cartesian pose X(i) is now obtained when the joint angles are Q2(i), instead of Q1 (i) . It is recalled that the absolute Cartesian pose X(i) was measured during the initial phase using the laser tracker.

- Compute the Cartesian pose Y(i) of the distal end 6 of the robot arm 3 using forward kinematics and the nominal kinematic model for the joint angles Q2(i) mentioned above.
- In the case of the need for very small cycle times, the available time of this process collecting calibration data is very restricted. Here, the Jacobian matrix could be directly used for direct calculation of the drift dx (performing only one step of the method described in DE 199 30 087 B4), without performing the additional iterative fitting steps from DE 199 30 087 B4. However by performing the iterative process the accuracy is increased and a proof of the real deviations and not only a calculation based on estimations is obtained.

In other words, the above procedure provides information that the robot 1 actually rests in Cartesian pose X(i) in the current state when the joint angles are Q2(i), rather than Y(i) (as would have been predicted based on the nominal model). It is important that a rather high accuracy in the data collected (joint angles) is required. For this reason, path trajectories have been generated in the robot movements - when collecting calibration data - that minimize backlash effects.

After the steps above for all the reference poses have been followed, during the step of Error Identification the calibration data collected is used to update the kinematic model of the robot 1 using an optimization technique described above. In particular, the values of the Denavit-Hartenberg/Hayati parameters are searched which minimize the error between predicted (i.e., Y(i)) and actual poses of the distal end 6 of the robot arm 3 (i.e., X(i)) for the joint angles Q2 (i) .

The process described above summarizes the calibration procedure, where calibration data are collected and the kinematic model of the robot is updated. Given the updated kinematic model, it is now possible - in the step of Error Compensation - to compensate for any drift dx, and compute - for any pose in the robot workspace - the updated joint angles that will drive the robot 1 to the desired Cartesian pose T* in absolute space, compensating also for any thermal effects dA. In order to make clear the differences, the process Collection of Calibration Data described above is responsible for finding the updated joint angles in the PSD surfaces by applying the iterative closed-loop fitting process (calibration data), while the process described here is responsible for computing the updated joint angles that will drive the robot 1 with high accuracy in the whole workspace, using the updated kinematic model.

Assuming that the calibration process has been carried out, and the robot 1 must now return to its normal operation (e.g. measure car features, etc), an error compensation procedure is carried out to take into account the updated kinematic model, and compute the corrected joint commands.

If the desired Cartesian pose of the distal end 6 of the robot arm 3 is T*:

(i) Inverse kinematics and the nominal kinematic model are used to compute the joint angles Q that would drive the robot 1 to Cartesian pose T*.

(ii) Using forward kinematics and the updated kinematic model, the actual pose T of the distal end 6 is computed for joint angles Q.

(iii) An optimization stage is used to compute the joint angles Q+dq that minimize the error T*-T.

**Claims**

1. Method for in-line calibration of an industrial robot (1), the robot (1) comprising a fixed base section (2) and a multi chain link robot arm (3) , the chain links (4) interconnected and connected to the base section (2) of the robot (1), respectively, by means of articulated joints (5), wherein a distal end (6) of the robot arm (3) can be moved in respect to the base section (2) within a three-dimensional space into any desired position and orientation, referred to hereinafter as location, **characterized in that**

   - at least three light rays are generated by means of at least one light source (7) rigidly connected to the distal end (6) of the robot arm (3),
   - at least one optical position sensor (12), which is adapted for determining in a two-dimensional plane the position of a light ray impacting the sensor, is located in a fixed location in respect to the robot's base section (2) such that in a predefined calibration location of the distal end (6) of the robot arm (3) at least some of the light rays generated by the at least one light source (7) impact on the sensor (12) or on at least one of the sensors (12),
   - the distal end (6) of the robot arm (3) is driven by means of control signals from a robot controller (1a) into a predefined calibration location, wherein at least some of the generated light rays impact on the sensor (12) or on at least one of the sensors (12) in certain positions (20),

- the positions (20), in which the generated light rays impact on the sensor (12) or on the at least one of the sensors (12), is determined,

- the robot (1) is driven by means of an iterative closed-loop control process such that the positions (20) of the light rays which impact on the sensor (12) or on the at least one of the sensors (12) are moved into previously defined positions (20') characterizing the calibration location of the distal end (6) of the robot arm (3) in a previous state of the robot (1),

- when the light rays which impact on the sensor (12) or on the at least one of the sensors (12) have reached the previously defined positions (20'), characteristic parameters of the robot arm (3) are determined, which unambiguously characterize the location of the distal end (6) of the robot arm (3) in the robot controller (1a),

- the characteristic parameters determined are compared to corresponding previously defined characteristic parameters of the robot arm (3) for these predefined positions (20'), the previously defined characteristic parameters of the robot arm (3) defining a kinematic model of the robot (1) in the previous state,

- differences between the characteristic parameters determined and the corresponding previously defined characteristic parameters are used to update the kinematic model of the robot (1), and

- the updated kinematic model of the robot (1) is adapted to be used during conventional operation of the robot (1) to correct the original location of the distal end (6) of the robot arm (3), the original location resulting from control signals issued by the robot controller (1a) during the conventional operation of the robot (1), into a more accurate location, which takes into account inaccuracies of the robot arm (3) occurring during the conventional operation of the robot (1).

2. Method according to claim 1, **characterized in that** the light rays generated by the at least one light source (7) extend in at least two orthogonal planes.

3. Method according to claim 1 or 2, **characterized in that** the at least one light source (7) comprises a laser or at least one semiconductor light source, in particular a light emitting diode LED.

4. Method according to one of the preceding claims, **characterized in that** the at least one light source (7) generates light rays within a frequency range of light visible for a human eye or invisible for a human eye, the latter comprising in particular an infrared IR- or an ultraviolet UV-frequency range.

5. Method according to one of the preceding claims, **characterized in that** the characteristic parameters of the robot arm (3) comprise current angle values ($q_1$, $q_2$, ..., $q_{NumberDOFs}$) of the robot arm's articulated joints (5) or current values of the location, comprising a position (x, y, z) and a rotation (a, b, c), of the distal end (6) of the robot arm (3).

6. Method according to one of the preceding claims, **characterized in that** the method is repeated for a plurality of different calibration locations, each **characterized by** certain positions (20') where the generated light rays impact on the sensor (12) or at least one of the sensors (12).

7. Method according to one of the preceding claims, **characterized in that** the method is repeated for a plurality of different calibration poses of the robot arm (3) for each calibration location, each corresponding to certain angle values of the articulated joints (5).

8. Method according to one of the preceding claims, **characterized in that** the robot's previous state is a cold state of the robot (1) and that the calibration method is executed in a warm state of the robot (1).

9. Method according to one of the preceding claims, **characterized in that** the sensors (12) comprise a position sensitive device PSD having a laminar semiconductor as a two-dimensional sensitive surface (21) or a digital camera having a CMOS or a CCD as a two-dimensional sensitive surface (21).

10. Method according to one of the preceding claims, **characterized in that** the at least one light source (7) generates at least three rays.

11. Method according to one of the preceding claims, **characterized in that** for each calibration location of the distal end (6) of the robot arm (3) the light rays are generated contemporarily or sequentially.

12. Method according to one of the preceding claims, **characterized in that** during the previous state of the robot (1) a sensitivity matrix is defined for each calibration location, the sensitivity matrix comprising information about changes in the characteristic parameters of the robot arm (3) resulting from small displacements of the distal end (6) of the robot arm (3) in respect to the calibration location for each degree-of-freedom initiated by control signals issued by the robot controller (1a) and about the corresponding changes in the positions (20) on the sensor (12) or at least one of the sensors (12).

13. Method according to claim 12, **characterized in that** the displacements of the distal end (6) of the robot arm (3) during determination of the sensitivity matrix comprise small translations (dx', dy', dz') and rotations (da, db, dc).

14. Method according to claim 12 or 13, **characterized in that** the sensitivity matrix is used for driving the robot (1) by means of the iterative closed-loop control process such that the positions (20) of the light rays which impact on the sensor (12) or on the at least one of the sensors (12) are moved into the previously defined positions (20') characterizing the calibration location of the distal end (6) of the robot arm (3) in the previous state of the robot (1).

15. Method according to one of the preceding claims, **characterized in that** during the previous state of the robot (1) absolute values of the distal end (6) of the robot arm (3) are determined by means of a laser tracker, a coordinate measuring machine CMM or any other measurement tool located in a defined relationship to an external coordinate system and to the robot base (2), for each calibration position and stored.

16. Method according to one of the claims 12 to 14, **characterized in that** during the previous state of the robot (1) absolute values of the distal end (6) of the robot arm (3) are determined by means of a laser tracker, a coordinate measuring machine CMM or any other measurement tool located in a defined relationship to an external coordinate system and to the robot base (2), for each calibration position and for each of the respective small displacements and stored.

17. Method according to one of the preceding claims, **characterized in that** the light rays which impact the sensors (12) are considered to have reached the predefined positions (20') on the sensor (12) or on the at least one of the sensors (12) if errors, in particular least mean square errors, between the actual positions (20) of the light rays and the predefined positions (20') have reached a minimum.

18. Method according to one of the preceding claims, **characterized in that** the light rays are generated such that an intersection of the light rays is located in a distance to the distal end (6) of the robot arm (3).

19. Calibration system (30) for in-line calibration of an industrial robot (1), the robot (1) comprising a fixed base section (2) and a multi chain link robot arm (3), the chain links (4) interconnected and connected to the base section (2) of the robot (1), respectively, by means of articulated joints (5), wherein a distal end (6) of the robot arm (3) can be moved in respect to the base section (2) within a three-dimensional workspace into any desired position and orientation, referred to hereinafter as location, **characterized in that** the calibration system (30) comprises means (7, 12) for executing the method according to one or more of the preceding claims.

20. Industrial robot (1) comprising a fixed base section (2) and a multi chain link robot arm (3), the chain links (4) interconnected and connected to the base section (2) of the robot (1), respectively, by means of articulated joints (5), wherein a distal end (6)of the robot arm (3) can be moved in respect to the base section (2) within a three-dimensional workspace into any desired position and orientation, referred to hereinafter as location, **characterized in that** the industrial robot (1) comprises a calibration system (30) according to claim 19 for effecting an in-line calibration of the robot (1).

Fig. 1

Fig. 2

Fig. 3

Fig. 4

**12**

**20'**

**21**

y

**20**

x

## Fig. 5

**10**

**12**

**13**

**11**

**15**

**15**

**15**

**14**

## Fig. 6

Fig. 7

Europäisches
Patentamt

European
Patent Office

Office européen
des brevets

# EUROPEAN SEARCH REPORT

Application Number

EP 12 18 9174

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/273202 A1 (BISCHOFF RAINER [DE]) 8 December 2005 (2005-12-08) | 1-3,5,6, 9-11, 15-20 | INV. B25J9/16 |
| Y | * paragraphs [0010] - [0012], [0017], [0018], [0020], [0042] - [0044], [0048] - [0050]; figures 1,3 * | 4,7,8, 12-14 | |
| Y | EP 1 584 426 A1 (FANUC LTD [JP]) 12 October 2005 (2005-10-12) | 12-14 | |
| A | * paragraphs [0022], [0030], [0032] - [0037], [0040] - [0042]; figures 5,9,10 * | 1,17 | |
| Y | EP 2 199 036 A2 (KUKA ROBOTER GMBH [DE]) 23 June 2010 (2010-06-23) | 4,7,8 | |
| A | * paragraphs [0009], [0010], [0013] - [0015], [0018] - [0021], [0026], [0029], [0030] * | 1-3,5, 9-11,15, 18 | |
| A,D | DE 199 30 087 B4 (TASSAKOS CHARALAMBOS [DE] INOS AUTOMATIONSSOFTWARE GMBH [DE]) 30 August 2007 (2007-08-30) * the whole document * | 1,12-16 | |

TECHNICAL FIELDS SEARCHED (IPC)

B25J

The present search report has been drawn up for all claims

| Place of search | Date of completion of the search | Examiner |
|---|---|---|
| The Hague | 15 February 2013 | Salvador, Didier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 722 136 A1**

**ANNEX TO THE EUROPEAN SEARCH REPORT
ON EUROPEAN PATENT APPLICATION NO.**                    EP 12 18 9174

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2013

| Patent document cited in search report | | Publication date | Patent family member(s) | | Publication date |
|---|---|---|---|---|---|
| US 2005273202 | A1 | 08-12-2005 | DE 102004026814 A1<br>EP 1604789 A2<br>JP 2005346718 A<br>US 2005273202 A1 | | 29-12-2005<br>14-12-2005<br>15-12-2005<br>08-12-2005 |
| EP 1584426 | A1 | 12-10-2005 | CN 1680774 A<br>EP 1584426 A1<br>JP 4191080 B2<br>JP 2005300230 A<br>US 2005225278 A1 | | 12-10-2005<br>12-10-2005<br>03-12-2008<br>27-10-2005<br>13-10-2005 |
| EP 2199036 | A2 | 23-06-2010 | DE 102008060052 A1<br>EP 2199036 A2 | | 17-06-2010<br>23-06-2010 |
| DE 19930087 | B4 | 30-08-2007 | NONE | | |

EPO FORM P0459

For more details about this annex : see Official Journal of the European Patent Office, No. 12/82

24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19930087 B4